(19) Europäisches Patentamt
European Patent Office
Office européen des brevets

(11) EP 1 065 601 A1

(12) EUROPEAN PATENT APPLICATION

(43) Date of publication:
03.01.2001 Bulletin 2001/01

(51) Int Cl.7: G06F 15/80

(21) Application number: 99305271.1

(22) Date of filing: 02.07.1999

(84) Designated Contracting States:
AT BE CH CY DE DK ES FI FR GB GR IE IT LI LU MC NL PT SE
Designated Extension States:
AL LT LV MK RO SI

(71) Applicant: BRITISH TELECOMMUNICATIONS public limited company
London EC1A 7AJ (GB)

(72) Inventor: Rix, Antony William
Cambridge Cambridgeshire CB3 0LB (GB)

(74) Representative:
Lidbetter, Timothy Guy Edwin et al
BT Group Legal Services,
Intellectual Property Department,
8th Floor, Holborn Centre,
120 Holborn
London EC1N 2TE (GB)

# (54) Training process

(57) Neural networks and other trainable processes are generally trained by attempting to find a set of weighting values, (one for each parameter in the training data) which best matches a set of training data. Various iterative processes are known for deriving such a "best fit". However, because of statistical fluctuations in this data and other reasons, the weighting function so derived from a mathematical "best fit" may have unrealistic consequences for the physical environment from which the data was obtained. In particular, spurious results may be obtained for data points remote from the training sample.

In many cases it is reasonable to expect that the function to be derived is monotonic (its gradient never changes sign). It follows from this that the sign of each weighting value for each parameter should be predetermined. However, simply rejecting any parts of the solution space in which the weighting value is of the wrong sign can disrupt the "best fit" iterative process.

The present invention ensures that each weighting value w is of the desired sign by defining w as a function of an unconstrained variable v: w = f(v), the function being chosen such that for all real values of v, w is positive (or negative if a negative-gradient function is required). The "best fit" process can then be performed on the unconstrained variable v. Suitable functions include **$w = v^2$, $w = e^v$, $w = |v|$, $w = v + |v|$, $w = 1/(1 + e^{-v})$ and $w = \log[e^v + 1]$**.

The technique has wide application in many fields where the relationships are complex and imperfectly understood. In fields such as economics, historical data can be used to generate an empirical relationship, which can then be used to predict future or hypothetical results. Another, more technical, application is in the field of analysis of audio or other signal quality, where subjective data from a group of human subjects can be used to assess the quality of a sample to provide the training data.

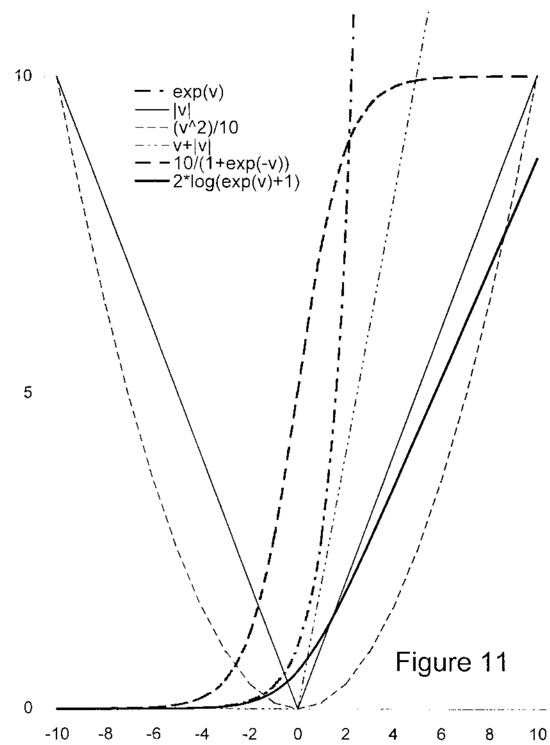


Figure 11

EP 1 065 601 A1

## Description

This invention relates to the training of neural networks and other trainable processes. A trainable process is a method of analysing data in a consistent manner without the need for rigorous knowledge of the relationships between input values and the output. Instead, known values are used to generate an empirical relationship, which can then be used to produce an output for other input data.

The technique has wide application in many fields. In fields such as economics, where the relationships are complex and imperfectly understood, historical data can be used to generate an empirical relationship, which can then be used to predict future or hypothetical results. Another, more technical, application is in the field of analysis of signal quality, and the invention will be discussed with particular reference to this field, although it is not to be considered as limitative.

Although characteristics such as signal-to-noise ratio or bit-error-rate are easily measured, the relationship of these properties to the user's perception of signal quality is complex and imperfectly understood. Subjective tests can be carried out in certain circumstances, but are inappropriate for use with live traffic for reasons of cost, confidentiality, and responsiveness. The expense of conducting subjective tests also limits the number of conditions that can be investigated. Data is therefore scarce. It is desirable to use this limited data set to produce a model, which can then automatically assess arbitrary networks, including conditions not seen in the training process. The model's predictions in the field must be reliable, irrespective of the condition under test, otherwise unnecessary work to trace non-existent faults, or poor customer satisfaction, will result.

An empirical relationship between input data and a human subject's opinion of the quality of the signal can be derived using a trainable process such as a neural net, and that empirical relationship can then be used on other data to predict what the human subject's opinion would have been. This allows the analysis to be automated, but produces results relevant to an end-user's perception of the quality of the signal. An example of such a system is described in International Patent Application WO97/05730.

Optimal use of subjective test data must be made in model design and training. A first stage is the extraction of degradation parameters that correlate with subjective opinion. If many such parameters are available an optimal subset can be used. The parameters are then mapped to subjective opinion scores using a well-behaved function with as few unknown coefficients as possible.

Robustness follows from the use of appropriate training data and from the design of each stage in the model to maintain a reliable, well-understood relation with the amount of degradation. Although it is not possible to guarantee the model's performance on unseen network conditions, knowledge of its operation and the limits of its behaviour gives greater confidence in the model's predictions (even in extreme conditions such as network malfunction), and an indication of the circumstances in which it will fail.

The parameters that are extracted should describe distinct aspects of signal degradation. Different degrading processes will have different profiles in this parameter space. It is likely that each parameter $x_i$, for a given class of degrading process, has a monotonic relation to perceived degradation - that is, it is a function whose gradient is always of the same sign (positive or negative). Moreover, it is likely that the sign of that relation is also known, in other words whether $x_i$ increases or decreases with increasing degradation.

Auditory models, a component of most current audio assessment models, provide a signal representation that can satisfy these requirements, at least in respect of the training data. They typically reproduce key features of the human auditory system (time/frequency resolution and masking and non-linear loudness response) in a spectrogram-like format. This enables a number of parameters, with easily understood behaviour, to be extracted. It is likely that a complicated relationship will exist between these different parameters and subjective opinion. Whilst the accuracy of regression to the training data will improve with increasing number of parameters, its consistency when applied to unknown data may not. Choice of parameters to use in the prediction should involve the application of intuition as well as objective comparison. For example, there may be a very large number of candidate parameters, with considerable redundancy; a small set of independent parameters can be extracted from them using a parameter selection technique. Other parameters, not picked by the selection technique, might also be included if there are good reasons.

For each item of training data, values of the measured parameters $x_1, x_2, x_3, x_4, \ldots\ldots\ldots x_n$ and the subjective opinion score y are measured. The opinion score y is generally a mean value of the scores given by several human subjects. A neural net training process is arranged to identify the "best fit" function $y = f(x_1, x_2, x_3, x_4, \ldots\ldots\ldots x_n)$ for the training data, where $x_1, x_2, x_3, x_4, \ldots\ldots\ldots x_n$ are independent variables each corresponding to one of the parameters in the training data. The values of "y" may be considered as defining an "n"-dimensional surface. However, the mathematically accurate "best fit" may have undesirable consequences in the real world. In particular, as shown in Figure 8, the scatter of data points may result in a "best fit" in which, for certain values of signal degradation, a predicted subjective opinion score increases (that is, the predicted opinion improves) as signal degradation increases.

It is therefore desirable in many circumstances to constrain the mapping between each input and the output to be monotonic. This could be achieved simply by rejecting any non-monotonic solution, but such a system could result in a large number of deep local minima in the optimisation process, making identification of the actual minimum (optimum) function harder to achieve, as will be discussed with reference to Figure 9.

According to the invention, there is provided a method of deriving a relationship between a plurality of input variables and a corresponding plurality of variables in which a weighting is applied to each of a plurality of training data values, and a function of the training data values is derived therefrom, wherein the weightings are defined in terms of a function of a free variable, the function being such that it can only take values of one sign, for all real-number values of the free variable. Thus the weighting function can be either be positive for all values of the free variable, or negative for all values of the free variable. For the purposes of this specification, a function whose minimum or maximum value is zero is not excluded from the definition of a function taking values of one sign.

The method of the invention is of particular application to the initialistaion of a signal quality analysis process, in which the method of the invention is applied to a set of training data comprising measured parameters, for which appropriate output values indicative of signal quality have been determined, thereby generating a function whereby further measured parameters may be processed to generate output values.

The invention may be carried out by a general-purpose computer, suitably programmed. Therefore, in another aspect the invention comprises a computer program product stored on a computer usable medium and directly loadable into the internal memory of a digital computer, comprising software code portions for performing the steps of the method of the invention when said product is run on a computer.

In another aspect, the invention comprises a computer program product stored on a computer usable medium, comprising:

computer-readable program means for causing a computer to read a plurality of input training data values and a corresponding plurality of variables

computer readable program means for causing the computer to define, for each of the training data values, a weighting defined in terms of a function of a free variable, the function being such that, for all real-number values of the free variable, the function can only take values of one sign;

computer readable program means for causing the computer to derive therefrom a function of the training data values, defining a relationship between the input variables and the corresponding plurality of variables.

Conveniently, the function can be derived by means of a neural net process, trained using any suitable method, such as the "gradient descent" method, or a non-linear vector optimisation algorithm. The weighting-defining function may be a function of the form w = f(v), where "w" is positive for any real-number value of "v". Thus, no constraint is imposed on the value of "v".

The weighting-defining function may be of any of the following forms, which are all positive or zero for any real value of v, and are represented in Figure 11.

| | | |
|---|---|---|
| $w = v + \|v\|$<br>$w = \|v\|$ | $w = v^2$<br>$w=e^v$ | $w\ 1/(1 + e^{-v})$<br>$w = \log[e^v + 1]$. |

In Figure 11 some of these functions have been multiplied or divided by a suitable factor, as indicated in the Figure, to allow them to be represented conveniently on the same scale.

Non-monotonicity in the weighting-defining function does not preclude the use of that function, provided that the resulting weightings are themselves positive. The invention results in a nondecreasing relationship between any input and the output, both for any node in the network and also for the entire network.

The method of the invention may be applied to a set of training data comprising measured parameters, for which appropriate output values indicative of signal quality have been determined, thereby generating a function whereby further measured parameters may be processed to generate output values.

An embodiment of the invention will now be described, by way of example, with reference to the figures, in which:

Figures 1 and 2 illustrate diagrammatically the generation of a function using a training process such as a neural network, and subsequent use of the function

Figure 3 illustrates a typical network definition function

Figures 4 and 5 illustrate non-linear mappings which can result from an unconstrained network

Figures 6 and 7 illustrate a typical neural network structure

Figure 8 illustrates a network definition function generated by an unconstrained network

Figure 9 illustrates a network definition function generated by a network constrained by exclusion of undesirable solutions

Figure 10 illustrates a network definition function generated by a network constrained according to the method of the invention;

Figure 11, which has already been discussed, illustrates five suitable weighting-definition functions.

Figures 1 and 2 show the general arrangement of a neural network system used for analysis of data. It will be appreciated that the various functional elements depicted can conveniently be embodied as software running on a general purpose computer. Figure 1 illustrates the training phase, in which a data set $x_t$ for which

the desired output is known, and the desired output data $y_t$, are both supplied from a data source 1 to the neural net 3. From this input the neural net 3 generates a network definition function - that is a function g(x) which, when applied to the data set, produces the predetermined outcome $y_t$. This function g is then output to a store 4.

Further data x, for which the output is not known, can then be supplied from a source 2. The network definition function g (now stored in the store 4) is now applied to this data to produce a set of values output y which are delivered to an output 6.

Figure 3 illustrates a set of sample data having two independent variables $x_1$, $x_2$ and a theoretical output function *g:* the value of $g(x_1, x_2)$ is shown by shading. It will be seen that the function *g* is monotonic with respect to both $x_1$ and $x_2$. The situation depicted is representative of many situations in which observations $x_1$ and $x_2$ are partially correlated, such that the data set is clustered in a limited region of the total data space.

Figures 4 and 5 illustrate how a purely mathematical "best-fit" analysis can lead to unrealistic mapping functions. In both these examples, the input data (degradation of performance of a speech-to-digital coder/decoder ("codec")) was plotted against subjective opinion scores given by human subjects, to give a set of data points.

There are many functions which could be used to map such parameters to predicted subjective opinion. Options include linear regression, Volterra (linear in the parameters) non-linear regression, radial basis functions or neural networks.

Linear regression is of the form $y = w_0 + w_1 x_1 + w_2 x_2 + \dots w_n x_n$

Non-linear regression methods take various forms, Volterra being the most common. This is linear in the parameters (the w's) but takes as its input various non-linear combinations of x:

$$y = w_0 +$$
$$w_1 x_1 + w_2 x_2 + \dots + w_n x_n +$$
$$w_{11} x_1^2 + w_{22} x_2^2 + \dots + w_{nn} x_n^2$$
$$w_{12} x_1 x_2 + \dots$$

up to some pre-determined order (in this case squares and products of each parameter).

Radial basis functions have the form

$$y = w_0 + \Sigma_k w_k f( |X - R_k|^2 )$$

This takes a number of radial basis functions f ( $|X - R_k|^2$), based on the Euclidean distance (radius) from the input vector X ($x_1$; $x_2$;...) to each "basis vector" $R_k$. The resulting bases are then mapped using conventional linear-in-the-parameters regression. The idea is that the basis function (normally f() is the same for each $R_k$) becomes smaller as its input grows. A typical basis function is the Error function (also known as the Gaussian function): $f(x) = \exp( - x^2 / 2 \sigma^2 )$. Radial basis functions have several problems, not least of which is the choice of value for σ. For applications with highly correlated data, they have problems generalising. For the purposes of illustration neural nets will be discussed in this specification, but this is not to be taken as limitative on the scope of the claims.

None of these techniques guarantees monotonicity or preservation of correlation sign between any one parameter and the opinion score. Diagrammatic examples of such behaviour are presented in figure 4 and 5, which illustrate the behaviour of an unconstrained neural net.

Figure 4 illustrates that unconstrained training may result in inversion of sections of the prediction curve even for the training data. In Figure 4 a neural net was used to generate a network definition function shown by the solid line. It can be seen that because of the spread of data points inevitable when subjective assessments are recorded, this "best fit" curve is not monotonic. However, it is unrealistic to suppose that any individual's opinion score really would improve for increased signal degradation.

Figure 5 shows a consequence of training a neural net (using a first codec 1) such that opposite weights are given to two degradation parameters ($x_1$, $x_2$) that are partially related in a non-linear way. Codec 1 only tests part of the solution space (solid line), in which the negative weight of one of the parameters $x_2$ is always outweighed by the other parameter $x_1$. Figure 5 also shows the results of applying this function to a second codec (dotted line), in which a different balance between these two parameters leads to inversion of the function in part of the prediction curve.

In both Figures 4 and 5 a smoother, more robust fit is also plotted (chain dotted line). The process of the invention is arranged to generate such a function.

A neural network structure suitable for use in the invention is illustrated in figures 6 and 7. Figure 6 shows the structure of a typical node (known herein as node "k") in the first hidden layer of a neural network. Each input ($x_1$, $x_2$, etc) has a weighting ($w_{k1}$, $w_{k2}$, etc) applied to it, and these weighted values $w_{k1}x_1$, $w_{k2}x_2$, etc are summed, together with a bias value $b_k$, to produce a value $z_k$. Thus,

$$z_k = w_{k1} x_1 + w_{k2}x_2 + \dots b_k$$

In the invention, the values of w are generated as f(v), some function such that f(v) > = 0 for all v. There is no exact requirement for this function to be itself monotonic, although a non-monotonic function, such as $w = v^2$

may be slower to operate with as the optimisation program will consider -v and +v as separate points in the solution space although they generate the same weighting. The invention results in a nondecreasing relationship between any input and the output, both for any node in the network and also the entire network.
Suitable functions for this purpose include:

- **w** = **v** + |**v**| - this function is zero for all negative values of "v"
- **w** = |**v**| - this function is not monotonic
- **w** = $\mathbf{v}^2$ - this function is also not monotonic, and increases rapidly with "v"
- **w** = $\mathbf{e}^{v}$ - this function increases extremely rapidly with "v"
- **w** = **1/(1** + $\mathbf{e}^{-v}$) - known as the logistic function, which can only take values between zero and 1
- **w = log [exp{v} + 1**] - this is the integral of the logistic function, and has the useful properties of being smooth, monotonically increasing, and tending to $e^v$ for v < < 0 and to v for v > > 0. Large values of w tend to make training very slow, so it is useful to avoid having the values of w grow exponentially.

These values for z are then normalised using a non-linear activation function φ(z) to generate an output $y_k$. This function φ(z) may be any function that is monotonic within the range of values of z, for example the functions:

$$\varphi(z) = \tanh(z) = (e^z - e^{-z}) / (e^z + e^{-z})$$
$$\varphi(z) = 1 / (1 + e^{-z}).$$

These functions are both monotonic for all real values of z, and are commonly used for neural network activation functions. The second function, which is known as the logistic function, has already been discussed in relation to Figure 11, as one of those also suitable for generating the weighting functions.

The output "y" from each node can be used, with others, in further layers (not shown in Figure 7). The outputs from the final hidden layer (the only hidden layer in Figure 7), are then combined in an output layer, which operates in a similar manner. At each layer, the "best fit" combination of weights is selected.

In more detail, the training process for a neural net is as follows. The training data consists of sets of observed input vectors $x_o(j)$, each with a corresponding set of one or more outputs $y_o(j)$. The network is defined by a function y = net( x, {w(k,i)} ). The network is initialised with a set of random weights {w(k,i)}
An error measure E, typically the sum of the squared differences, is computed

$$E = \Sigma_j\, [\mathrm{net}(\, x_o(j), \{w(k,i)\}\,) - y_o(j)]^2$$

The minimum value for E is determined by "weight update" based on gradient descent; for example, with constant η setting the descent rate,

$$w(k,i) = w(k,i) - \eta * \partial E/\partial w(k,i).$$

Various gradient descent applications and methodologies exist. The process of "momentum" involves making steps which are a linear combination of the gradient and the step made last time that weight was updated.

The gradient descent update can be performed with E calculated for a single data item (one $x_o(j)$,$y_o(j)$ pair) at a time, or the entire set of training data. However the "weight update" generally consists of adding some correction amount to each weight.

In the present invention, "v" replaces "w" in all the above relationships, so the network parameter is y = net( x, {v(k,i)} and the error is

$$E = \Sigma_j\, [\mathrm{net}(\, x_o(j), \{v(k,i)\}\,) - y_o(j)]^2$$

giving an example weight update rule

$$v(k,i) = v(k,i) - \eta * \partial E/\partial v(k,i)$$

A useful consequence of using the weighting function given above is that its derivative is the logistic function **E** = **1/(1** + $\mathbf{e}^{-v}$**)** already discussed. dE/dv(k,i) includes the derivative of the weighting function i.e. the logistic, ensuring that each step is bounded in size and making the training more stable.

An alternative optimisation algorithm was used in the following example. Here, a "blind" optimisation algorithm was used to perform the gradient descent rather than the rules described above. This process, known as the Nelder-Mead simplex search, is applied by supplying a cost function, in this case

$$E = \Sigma_j\, [\mathrm{net}(\, x_o(j), \{v(k,i)\}\,) - y_o(j)]^2$$

(this calculates E given the training data and a specified position) and the initial position, say $\{v_o(k,i)\}$. By position is meant location in the space of weights $\{v_o(k,i)\}$, which can be imagined as some high-dimension vector, or "solution space". In practice this method also performs a gradient descent, but without the need to compute ∂E/∂v(k,i) explicitly.

The number of free parameters is determined as follows. If there are K nodes in the hidden layer and N inputs, each node in the hidden layer has N + 1 free parameters (weights and one bias), giving K(N + 1) free parameters for the hidden layer. Additionally the output node has K inputs and therefore K + 1 free parameters. This gives the total for a network with one hidden layer of K(N + 2) + 1 free parameters. Here, there are two inputs, so eight hidden nodes gives 33 free parameters, and four hidden nodes gives 17 free parameters. In the following example, two correlated variables $x_1$ and $x_2$ were created, and eight nodes were used in the single hidden layer, resulting in 33 free parameters. Similar behaviour has nevertheless been observed in less over-determined networks such as one with only four hidden nodes (17 free parameters).

For this example, a set of partially correlated points $x_1$ and $x_2$ were chosen. This data is representative of the inputs in the field of signal quality analysis. A scatter plot of $x_1$ and $x_2$ is shown by the crosses in Figure 3.

The desired output function was selected to be:

$$y_d = 0.4\{[x_1 + (x_2/10)]^2 + \sqrt{x_2}\}$$

Data was drawn from this distribution at the specified data points, and random observation errors taken from a Normal distribution with zero mean and standard deviation 0.05 were added. Neural networks were then investigated for finding the mapping $y_d = g(x_1, x_2)$.

Results were compared for an unconstrained network, in which the weightings $w_{ki}$ and $b_k$ to be applied by the network were allowed to take any values (Figure 8), and a constrained network in which $w_{ki}$ was forced to be positive using $w_{ki} = e^{vki}$, where $v_{ki}$ could take any real value, with the result that the network function is monotonic with respect to each input function (Figure 10). The biases bk were allowed to take any value.

The networks were trained to minimise mean squared error across a data set of 50 points using a vector optimisation algorithm with 10 000 iterations.

The results of the training are shown in figures 8 and 10, which show the results of using neural networks to find a mapping given a limited set of inputs. A fully-connected multi-layer perceptron structure with one output node and one hidden layer containing eight nodes was used for these examples. The output non-linearity chosen was the logistic function. The unconstrained network, (figure 8) in which weights may be positive or negative, produced a mapping that was accurate for the training set but did not generalise well. In particular, the mapping exhibits a local inversion on one side of the data space. It can clearly be seen that the unconstrained network in figure 8 has a 'valley' in the region of the initial data (compare with figure 3). This means that, for a given value of x1, decreasing x2 would result in a significant increase in the output, when a decrease is desired.

It would be possible to modify the unconstrained network simply by imposing a rejection of any result for which a non-monotonic function is generated. However, this would disrupt the optimisation algorithm, as can be seen by reference to Figure 9. Generally optimisation algorithms use gradient descent or similar techniques to approach an optimum solution. Such techniques involve the exploration of the solution space to discover the whereabouts of a minimum (optimum) value of the regression error. These techniques operate most effectively in solution spaces which vary smoothly, such as that shown (for one variable only) in Figure 9 (dotted line), in which regression error R of a function $g_t(x)$ is plotted against t. The full line shows the same plot, but modified such that any value of t giving a non-monotonic function $g_t(x)$ is barred from consideration by giving it a very high value. The effect is to produce deep local minima 91, 92, 93 between the barred values, as shown by the dotted line in Figure 9, which disrupt the optimisation algorithm. Effectively, the searching algorithm can become trapped between two such barred values, which act as barriers preventing the algorithm reaching the optimum solution (absolute minimum) 90.

This problem is overcome in the present invention by selecting a function $g_t(x)$ which is necessarily monotonic, and for which there are therefore no such barred regions. In the constrained network (Figure 10) weights were forced to be positive by passing them through an exponential function. In the example of Figure 10 the weights $w_{ki}$ were forced to be positive by using $w_{ki} = e^{vki}$, where $v_{ki}$ could take any real value. This gave only a slightly better accuracy on the training set but significantly better generalisation. Figure 10 shows that the constrained network increases smoothly moving away from the origin in any positive direction. This makes its output more robust to new data points occurring outside the space of the training set.

This result is reflected by the residual errors on both the training data set and the entire function, which are listed in the following Table. The RMS value of the observation errors applied to the training set was 0.05.

| RMSE for each data set | Training | Test |
|---|---|---|
| *Unconstrained network* | 0.0516 | 0.1385 |
| *Monotonic network* | 0.0505 | 0.0736 |

**RMS errors for each model.**

In this example, the constrained network also exhibited faster convergence. This is a further advantage, allowing training to be performed more quickly and for lower cost.

## Claims

1. Method of deriving a relationship between a plurality of input variables and a corresponding plurality of variables in which a weighting is applied to each of a plurality of training data values, and a function of the training data values is derived therefrom, wherein the weightings are defined in terms of a function of a free variable, the function being such that it can only take values of one sign, for all real-number values of the free variable.

2. Method according to claim 1, wherein the weighting-defining function is of the form $w = 1/(1 + e^{-v})$

3. Method according to claim 1, wherein the weighting-defining function is of the form $w = \log[e^v + 1]$.

4. A method according to claim 1 where the weighting-defining function is a function of the form w = f(v), where w is negative for any real value of "v".

5. A method of initialising a signal quality analysis process, comprising the steps of applying the method of any preceding claim to a set of training data comprising measured parameters, for which appropriate output values indicative of signal quality have been determined, thereby generating a function whereby further measured parameters may be processed to generate output values

6. A method according to any preceding claim, wherein the function is derived by means of a neural net process.

7. A method according to claim 6, wherein the network is trained using a gradient descent method

8. A method according to claim 6, wherein the network is trained using a non-linear vector optimisation algorithm.

9. A computer program product directly loadable into the internal memory of a digital computer, comprising software code portions for performing the steps of any of claims 1 to 8 when said product is run on a computer.

10. A computer program product stored on a computer usable medium, comprising:

    computer-readable program means for causing a computer to read a plurality of input training data values and a corresponding plurality of variables
    computer readable program means for causing the computer to define, for each of the training data values, a weighting defined in terms of a function of a free variable, the function being such that, for all real-number values of the free variable, the function can only take values of one sign;
    computer readable program means for causing the computer to derive therefrom a function of the training data values, defining a relationship between the input variables and the corresponding plurality of variables.

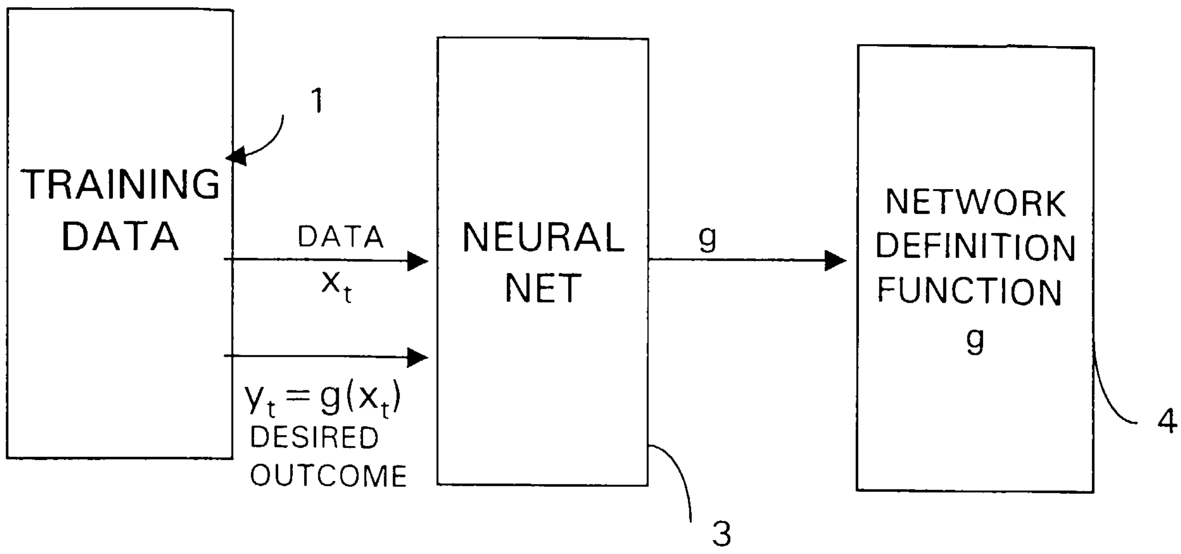


**Figure 1**

**Figure 2**

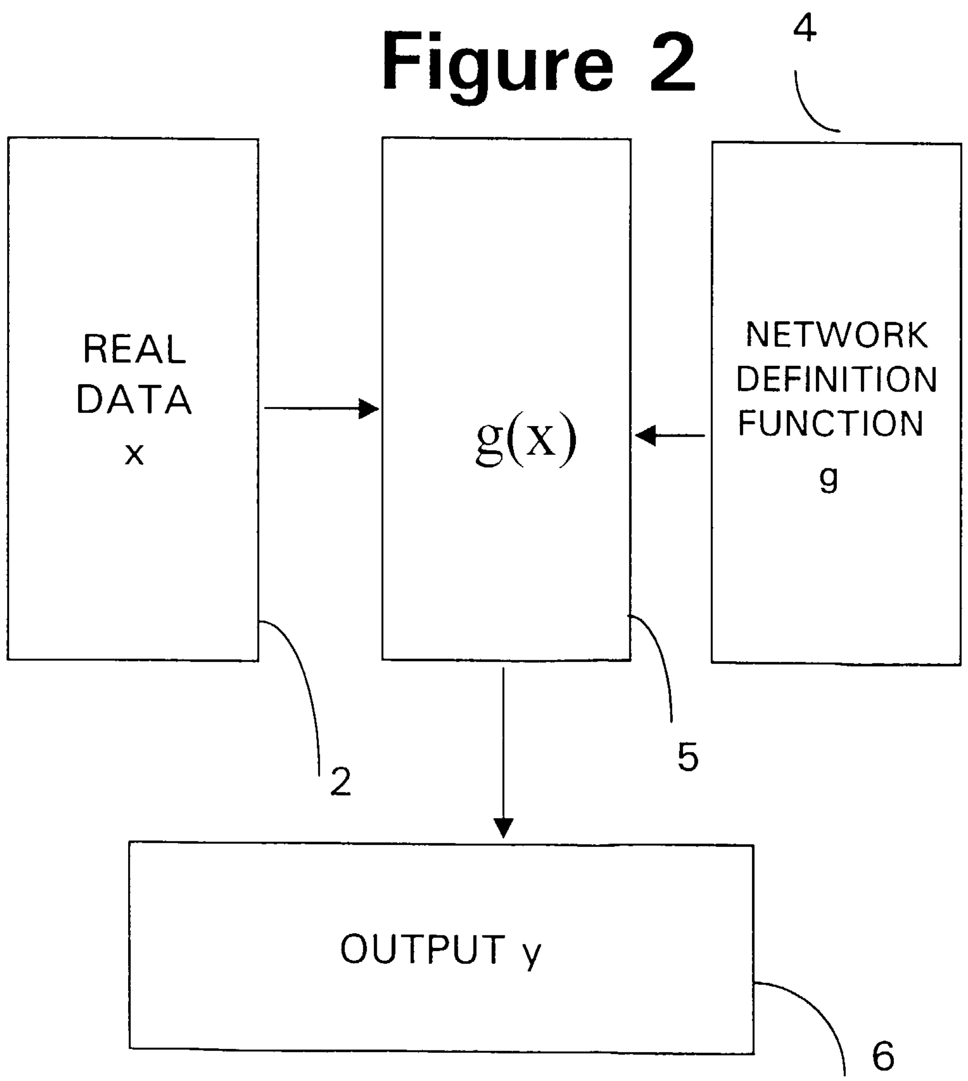

Figure 3

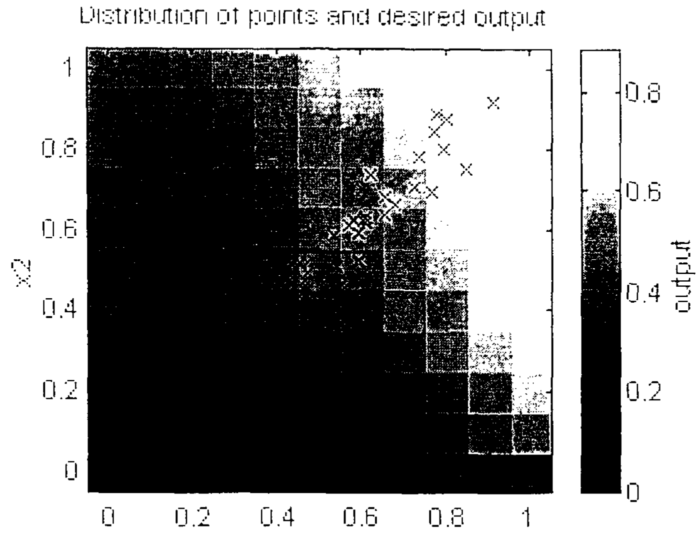


Figure 8

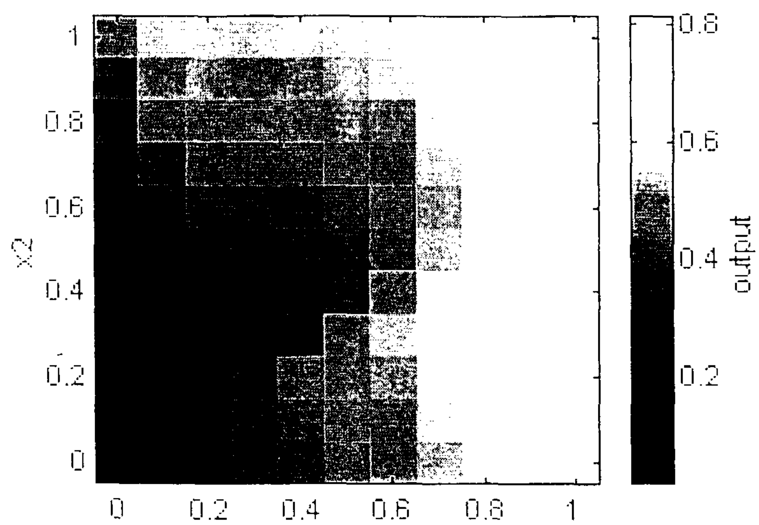


Figure 10

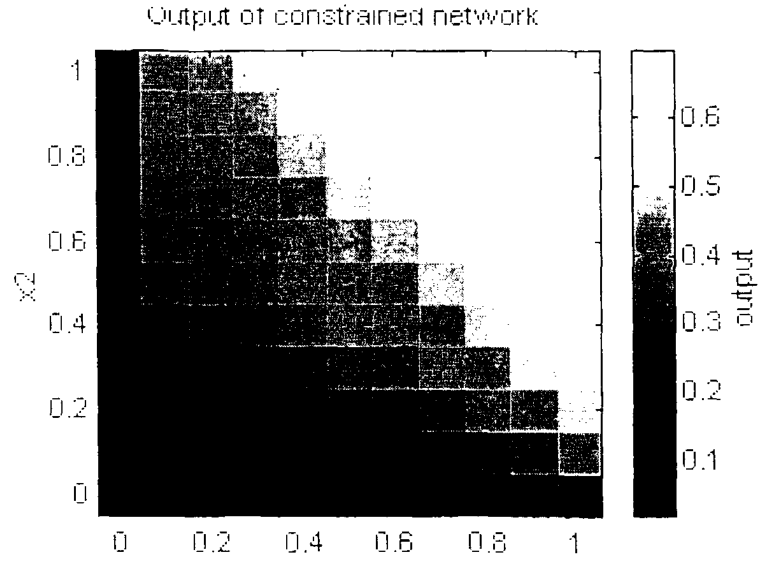

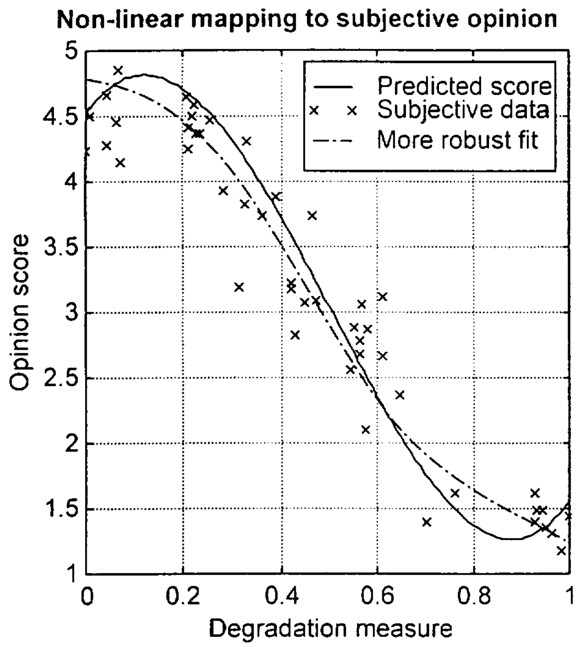


Figure 4

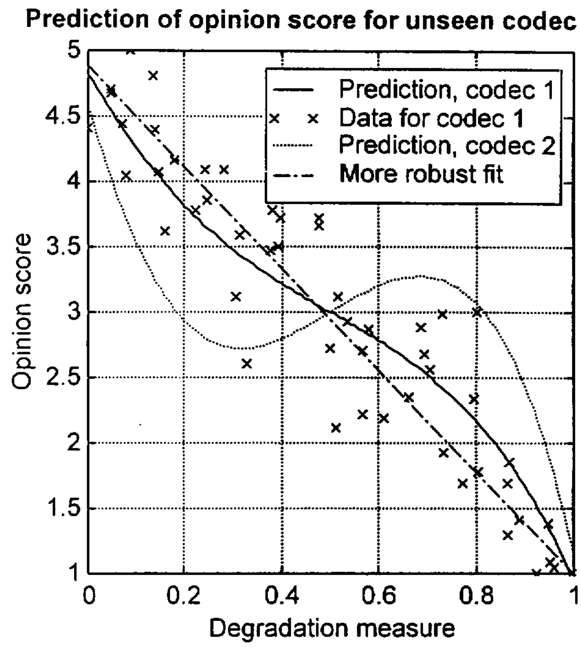


Figure 5

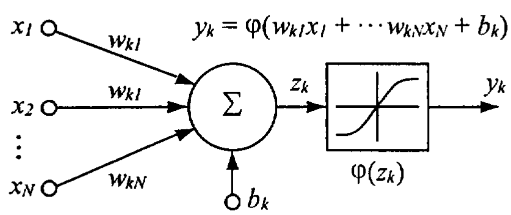


Figure 6

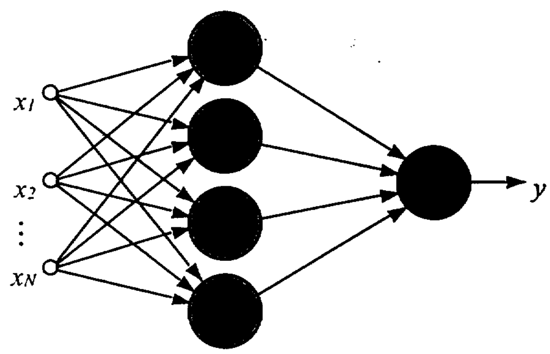


Figure 7

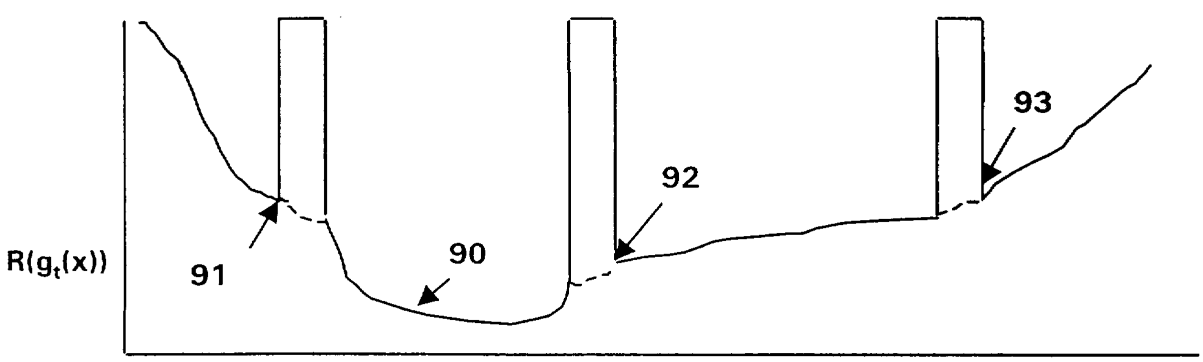


Figure 9

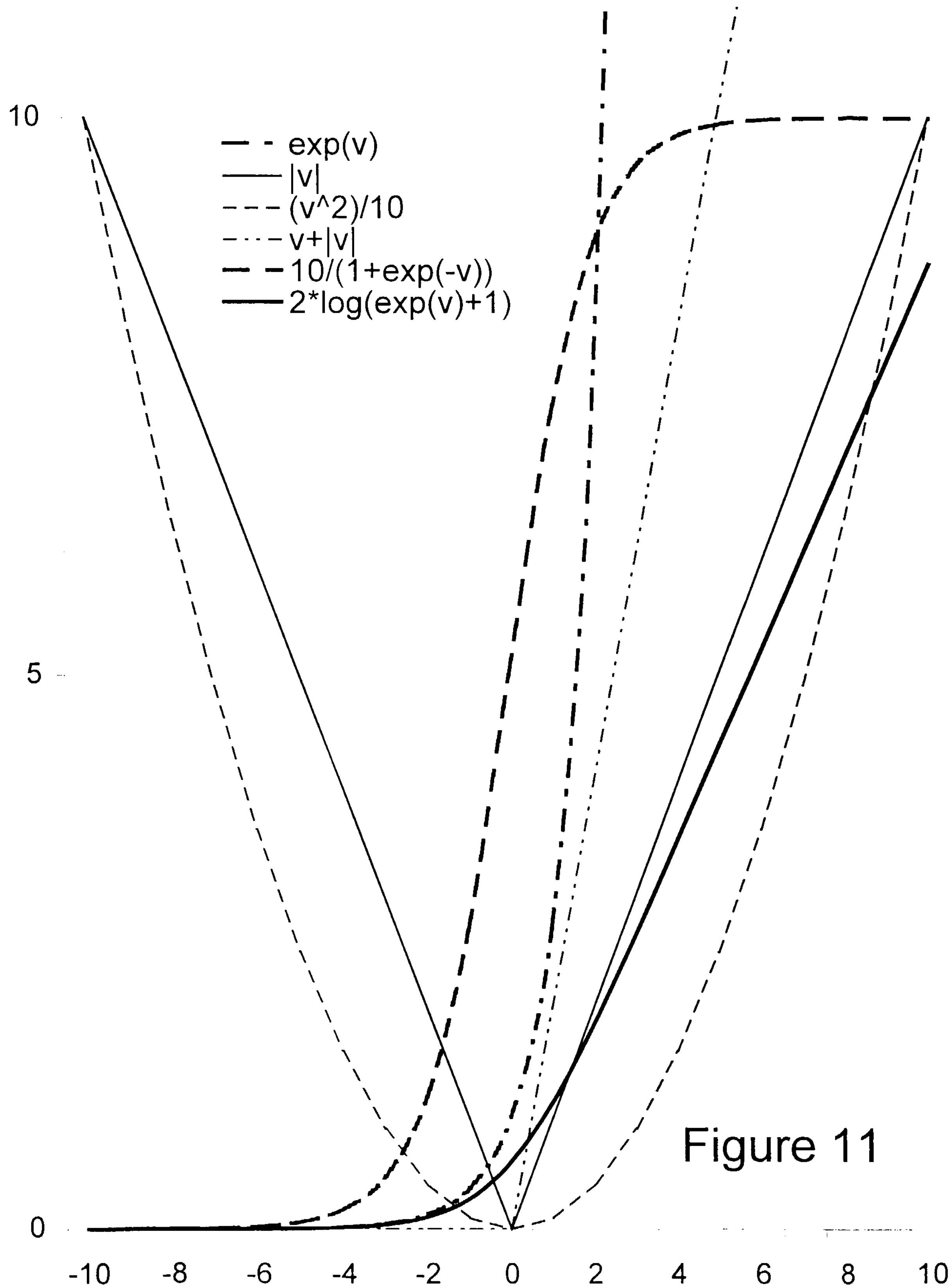


Figure 11

European Patent Office

# EUROPEAN SEARCH REPORT

Application Number
EP 99 30 5271

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 513 652 A (SIEMENS AG) 19 November 1992 (1992-11-19) * page 7, line 47 - page 11, line 18 * | 1,2,6,7, 9,10 | G06F15/80 |
| Y | EP 0 430 264 A (SHARP KK) 5 June 1991 (1991-06-05) * page 3, line 35 - page 4, line 43; figures 4,5 * | 1,2,6,7, 9,10 | |
| A | BULSARI A ET AL: "Application of the symmetric logarithmoid as an activation function of neurons in a feed-forward neural network" SCANDINAVIAN CONFERENCE ON ARTIFICIAL INTELLIGENCE - 91. 'ODIN'S RAVENS'. PROCEEDINGS OF THE SCAI '91, ROSKILDE, DENMARK, 21-24 MAY 1991, pages 62-70, XP000866596 1991, Amsterdam, Netherlands, IOS, Netherlands * page 62, line 1 - page 64, line 10 * | 3 | |
| | | | TECHNICAL FIELDS SEARCHED (Int.Cl.7) |
| A | HIMES G S ET AL: "CENTROID CALCULATION USING NEURAL NETWORKS" JOURNAL OF ELECTRONIC IMAGING,US,SPIE + IS&T, vol. 1, no. 1, January 1992 (1992-01), page 73-87 XP000323330 ISSN: 1017-9909 * page 80, left-hand column, line 13 - page 81, right-hand column, line 30; figure 11 * | 4 | G06F |

-/--

The present search report has been drawn up for all claims

| Place of search | Date of completion of the search | Examiner |
|---|---|---|
| THE HAGUE | 18 January 2000 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 99 30 5271

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SHOUHONG WANG ET AL: "A neural network technique in modeling multiple criteria multiple person decision making" COMPUTERS & OPERATIONS RESEARCH, FEB. 1994, UK, vol. 21, no. 2, pages 127-142, XP000866237 ISSN: 0305-0548 * page 130, line 18 - page 131, line 10 * ----- | 1 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 18 January 2000 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 30 5271

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2000

| Patent document cited in search report | Publication date | Patent family member(s) | Publication date |
|---|---|---|---|
| EP 0513652 A | 19-11-1992 | US 5461698 A | 24-10-1995 |
| EP 0430264 A | 05-06-1991 | JP 3168862 A | 22-07-1991 |
| | | DE 69031975 D | 26-02-1998 |
| | | DE 69031975 T | 30-07-1998 |

EPO FORM P0459

For more details about this annex : see Official Journal of the European Patent Office, No. 12/82